# EUROPEAN PATENT APPLICATION

(11) **EP 4 542 701 A1**
(43) Date of publication of application: **23.04.2025**
(21) Application number: 24197971.5
(22) Date of filing: 02.09.2024
(51) Int. Cl.: H01M 10/04, H01M 50/105, H01M 50/126, H01M 50/474, H01M 50/477, H01M 50/586, H01M 50/593

(54) **ELECTRODE ASSEMBLY AND RECHARGEABLE BATTERY INCLUDING THE SAME**

(30) Priority: 18.09.2023 KR 20230124189
(71) Applicant: SAMSUNG SDI CO., LTD., Yongin-si, Gyeonggi-do 17084 (KR)
(72) Inventor: LEE, Wonjin, 17084 Yongin-si (KR); JEOUNG, Seokyo, 17084 Yongin-si (KR); SON, Hee-Myeong, 17084 Yongin-si (KR); KIM, Donghyun, 17084 Yongin-si (KR)
(74) Representative: Marks & Clerk LLP

(57) **Abstract**

An electrode assembly includes: an assembly in which a first electrode, a separator overlapping the first electrode, and a second electrode overlapping the separator are alternately stacked; and a shape maintaining member at one side of the assembly where end portions of the first electrode, the separator, and the second electrode are exposed, wherein the shape maintaining member is a distance (e.g., a set or predetermined distance) away from both side surfaces of the assembly that are at both sides around the shape maintaining member.

## Description

### BACKGROUND

### 1. Field

Aspects of some embodiments of the present disclosure relate to an electrode assembly.

### 2. Description of the Related Art

A rechargeable battery is an electric power storage system that may provide relatively excellent energy density and may convert electrical energy to chemical energy to store the converted chemical energy. The rechargeable battery is generally rechargeable, as opposed to a primary battery that may not be recharged, so that rechargeable batteries may be widely used in IT devices such as smartphones, notebooks (or laptop computers), tablet PCs, or the like.

A rechargeable battery may be developed in various forms depending on a product in which it is used. Depending on a type of a case, a prismatic battery that maintains a certain shape and a pouch-type battery made of a flexible material may be utilized.

A pouch-type battery may have a shape in which an electrode assembly is sealed within an exterior material made of a flexible laminate material, and a case of the pouch-type battery may be relatively easily deformed by external pressure or impact compared with that of a prismatic pouch.

After the electrode assembly is inserted into the pouch, the case of the pouch-type battery may be deformed due to discharging of a gas generated through a formation process or a pressure difference between the inside and the outside of the pouch during charging and discharging of the battery.

Deformation of a shape of the pouch may cause defects such as a failure to install the pouch in a product due to a poor appearance and falling out of a tape attached during a packing or manufacturing process.

The above information disclosed in this Background section is only for enhancement of understanding of the background and therefore the information discussed in this Background section does not necessarily constitute prior art.

### SUMMARY OF THE INVENTION

Aspects of some embodiments of the present disclosure relate to an electrode assembly, and for example, to an electrode assembly for a rechargeable battery and a rechargeable battery including the same.

Aspects of some embodiments of the present disclosure include an electrode assembly that may minimize or reduce deformation of a shape of a pouch during a gas discharging process and charging and discharging of a rechargeable battery, and a rechargeable battery including the same.

According to some embodiments of the present disclosure, an electrode assembly includes: an assembly in which a first electrode, a separator overlapping the first electrode, and a second electrode overlapping the separator are alternately stacked; and a shape maintaining member that is formed at one side of the assembly where end portions of the first electrode, the separator, and the second electrode are exposed. According to some embodiments, the shape maintaining member is at a distance (e.g., a set or predetermined distance) away from both side surfaces of the assembly that are at both sides around the shape maintaining member.

According to some embodiments, the shape maintaining member may be at least 1/2 of a thickness of the electrode assembly from both side surfaces of the assembly.

According to some embodiments, the shape maintaining member may be continuously formed along the one side of the assembly.

According to some embodiments, the shape maintaining member may be discontinuously formed along the one side of the assembly.

According to some embodiments, the first electrode and the second electrode may include a first electrode tab and a second electrode tab protruding out of the separator, and the shape maintaining member may be at a region where the first electrode tab and the second electrode tab are not formed.

According to some embodiments, the separator may be bent toward a center of the assembly, and the shape maintaining member may be formed on the bent separator.

According to some embodiments, the end portion of the separator may be inserted into the shape maintaining member.

According to some embodiments, the shape maintaining member may become thicker toward a center bisecting a thickness of the assembly to have a hemispherical cross section.

According to some embodiments, a thickness of the shape maintaining member at an edge of the assembly may be in a range of 100 micrometers (µm) to 500 µm, and a thickness of the shape maintaining member at a center of the assembly may be 500 µm to 1000 µm.

According to some embodiments, the shape maintaining member may be formed with a constant thickness.

According to some embodiments, a thickness of the shape maintaining member may be 100 µm to 500 µm.

According to some embodiments, the shape maintaining member may be a photocurable adhesive.

According to some embodiments, the photocurable adhesive may be an acryl-based adhesive.

At least some of the above and other features of the invention are set out in the claims.

If an electrode assembly is formed according to embodiments of the present disclosure, deformation of a shape of a pouch during a gas discharging process and charging and discharging of a rechargeable battery after the electrode assembly is inserted into the pouch may be prevented or reduced, so that productivity of a pouch-type rechargeable battery is increased by relatively reducing an appearance defect and a dropout defect of a pack tape attached to a pack.

### BRIEF DESCRIPTION OF THE DRAWINGS

FIG. 1 is a schematic exploded perspective view of a rechargeable battery according to some embodiments of the present disclosure.
FIG. 2 is a plan view showing a lower surface of an electrode assembly of FIG. 1.
FIG. 3 is a cross-sectional view cut along a line III-III' of FIG. 2.
FIG. 4 is a cross-sectional view of an electrode assembly according to some embodiments of the present disclosure cut along the line III-III' of FIG. 2.
FIG. 5 is a schematic view of an electrode assembly according to some embodiments of the present disclosure.
FIG. 6 is a view for describing a method of folding a separator according to some embodiments of the present disclosure.
FIGS. 7 to 9 are schematic views of electrode assemblies according to some embodiments of the present disclosure.

### DETAILED DESCRIPTION OF THE EMBODIMENTS

Aspects of some embodiments of the present disclosure will be described more fully hereinafter with reference to the accompanying drawings so that those skilled in the art easily implements the embodiments. Embodiments according to the present disclosure may be modified in various different ways, all without departing from the scope of embodiments according to the present disclosure.

In order to more clearly describe aspects of embodiments according to the present disclosure, parts or portions that are irrelevant to the description are omitted, and identical or similar constituent elements throughout the specification are denoted by the same reference numerals. In addition, ordinal numbers such as "first", "second", "third", and the like in this specification are used to avoid confusion between constituent elements.

Hereinafter, a rechargeable battery according to some embodiments of the present disclosure will be described in more detail with reference to the accompanying drawings.

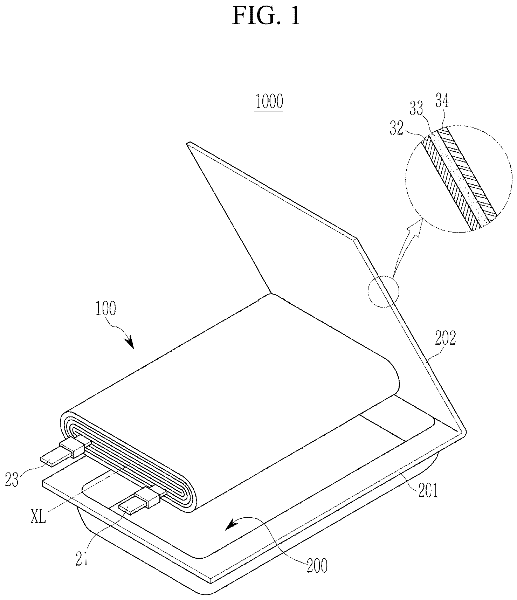

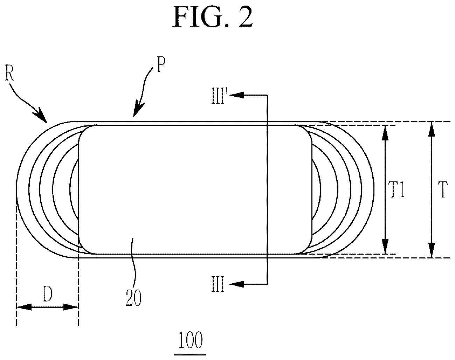

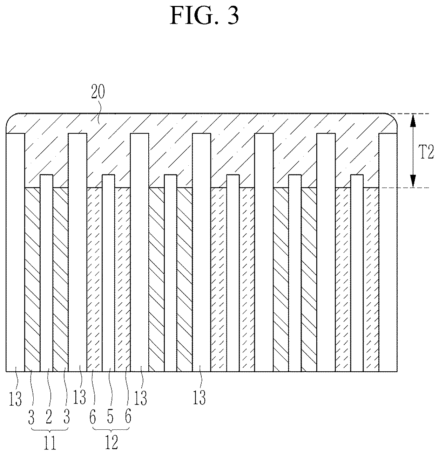

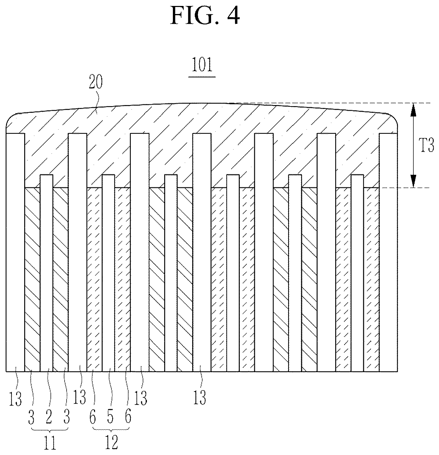

FIG. 1 is a schematic exploded perspective view of a rechargeable battery according to some embodiments of the present disclosure, FIG. 2 is a plan view showing a lower surface of an electrode assembly of FIG. 1, FIG. 3 is a cross-sectional view cut along a line III-III' of FIG. 2, and FIG. 4 is a cross-sectional view of an electrode assembly according to some embodiments of the present disclosure cut along the line III-III' of FIG. 2.

As shown in FIGS. 1 to 3, the rechargeable battery 1000 according to some embodiments of the present disclosure may include the electrode assembly 100 and a pouch 200.

The electrode assembly 100 includes a first electrode 11, a second electrode 12, and a separator 13 located between the first electrode 11 and the second electrode 12.

The separator 13 may be for insulation, and may be stacked in an order of the first electrode 11, the separator 13, the second electrode 12, and the separator 13.

The electrode assembly 100 may have a jelly roll shape wound around a winding axis XL in a state in which the first electrode 11, the separator 13, the second electrode 12, and the separator 13 are stacked. For example, the electrode assembly 100 may be wound and then may be pressed flat (or to be relatively more flat), and a cross-section cut in a vertical direction across the winding axis XL may have an oval shape that is longer in one direction.

According to some embodiments, in a cross-sectional view, the electrode assembly 100 may include a relatively flat or planar flat portion P and a relatively round curved portion R. The flat portion P may be a portion pressed after the electrode assembly 100 is wound, and the curved portion R may connect two flat portions facing each other. One rotation of the electrode assembly 100 may include a pair of flat portions P facing each other and a pair of curved portions R connected to an end portion of the flat portion P.

The first electrode 11 may be a positive electrode, and may include a substrate 2 and a positive electrode active material layer 3 formed on the substrate 2. The substrate 2 of the first electrode 11 may be aluminium. The positive electrode active material of the first electrode 11 may be a compound (a lithiated intercalation compound) capable of reversible intercalation and deintercalation of lithium. For example, the positive electrode active material of the first electrode 11 may use one or more types of composite oxides including lithium and a metal selected from cobalt, manganese, nickel, and a combination thereof. A content of the positive electrode active material may be in a range of 90 wt% to 98 wt% based on an entire weight of the positive electrode active material layer.

The positive electrode active material layer may further include a binder and a conductive material. For example, a content of each of the binder and the conductive material may be in a range of 1 wt% to 5 wt% based on the entire weight of the positive electrode active material layer.

The binder may attach positive electrode active material particles to each other well, and may attach the positive electrode active material to the substrate that is a current collector well. A representative example of the binder may include polyvinylalcohol, carboxylmethylcellulose, hydroxypropylcellulose, diacetylcellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, or the like, but the present disclosure is not limited thereto. The conductive material may be used to provide conductivity to the electrode, and may be any electronically conductive material that does not cause a chemical change in the battery.

The second electrode 12 may be a negative electrode, and the second electrode 12 may include a substrate 5 and a negative electrode active material layer 6 formed on the substrate 5. The substrate of the second electrode 12 may be copper. The negative electrode active material of the second electrode 12 may be a carbon-based active material. The carbon-based negative electrode active material may be artificial graphite or a mixture of artificial graphite and natural graphite.

Because a crystallographic characteristic of a particle of a case where a crystalline carbon-based material that is the artificial graphite or the mixture of artificial graphite and natural graphite is used as the negative electrode active material is more developed compared with that of a case where an amorphous carbon-based active material is used, the case where the crystalline carbon-based material that is the artificial graphite or the mixture of artificial graphite and natural graphite is used as the negative electrode active material may have an advantage in which an orientation characteristic of a carbon material within an electrode plate with respect to an external magnetic field is further improved. The artificial graphite or the natural graphite may have any shape as an amorphous shape (e.g. non-shaped), a plate shape, a flake shape, a spherical shape, a fibrous shape, or a combination thereof. For example, if the mixture of the artificial graphite and natural graphite is used, a mixing ratio may be in a range of 70:30 wt% to 95:5 wt%.

According to some embodiments, the negative electrode active material layer may further include at least one of a Si-based negative electrode active material, a Sn-based negative electrode active material, or a LiMOx-based negative electrode active material (M = metal). If the negative electrode active material layer includes the carbon-based negative electrode active material as a first negative electrode active material and the negative electrode active material as a second negative electrode active material, a mixing ratio of the first negative electrode active material and the second negative electrode active material may be 50:50 to 99:1 weight ratio.

The LiMOx-based negative electrode active material (M = metal) may be lithium vanadium oxide.

The Si-based negative electrode active material may include Si, Si-C composite, SiOₓ (0 < x < 2), or a Si-Q alloy (wherein Q is an element selected from the group consisting of an alkali metal, an alkaline-earth metal, a Group 13 element, a Group 14 element, a Group 15 element, a Group 16 element, a transition metal, a rare earth element, and a combination thereof, and not Si), and the Sn-based negative electrode active material may include Sn, SnO₂, or a Sn-R alloy (wherein R is an element selected from the group consisting of an alkali metal, an alkaline-earth metal, a Group 13 element, a Group 14 element, a Group 15 element, a Group 16 element, a transition metal, a rare earth element, and a combination thereof, and not Sn). At least one of the foregoing materials may be mixed with SiO₂. The elements Q and R may be used to be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof.

A content of the negative electrode active material in the negative electrode active material layer may be in a range of 95 wt% to 99 wt% based on an entire weight of the negative electrode active material layer.

The negative electrode active material may include a binder, and may selectively further include a conductive material. A content of the binder in the negative electrode active material may be in a range of 1 wt% to 5 wt% based on an entire weight of the negative electrode active material. In addition, if the conductive material is further included, a range of 90 wt% to 98 wt% of the negative electrode active material, a range of 1 wt% to 5 wt% of the binder, and a range of 1 wt% to 5 wt% of the conductive material may be used.

The binder may attach negative electrode active material particles to each other well, and may attach the negative electrode active material to the negative electrode substrate well. The binder may be a non-aqueous binder, an aqueous binder, or a combination thereof

The non-aqueous binder may include polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, polyamideimide, polyimide, or a combination thereof.

The aqueous binder may include a styrene-butadiene rubber, an acrylated styrene-butadiene rubber (SBR), an acrylonitrile-butadiene rubber, an acryl rubber, a butyl rubber, an ethylene propylene copolymer, polyepichlorohydrin, polyphosphazene, polyacrylonitrile, polystyrene, an ethylene propylene diene copolymer, polyvinylpyridine, chlorosulfonated polyethylene, latex, a polyester resin, an acrylic resin, a phenol resin, an epoxy resin, polyvinylalcohol, an acrylate-based resin, or a combination thereof.

If the aqueous binder is used as the negative electrode binder, a cellulose-based compound that may impart viscosity may be further included as a thickener. This cellulose-based compound may be used by mixing one or more types of carboxylmethyl cellulose, hydroxypropylmethyl cellulose, methyl cellulose, or an alkali metal salt thereof. Na, K or Li may be used as the alkali metal. A use content of the thickener may be in a range of 0.1 parts by weight to 3 parts by weight based on 100 parts by weight of the negative electrode active material.

The conductive material may be used to provide conductivity to the electrode, and may be any electronically conductive material that does not cause a chemical change in the battery. An example of the conductive material may be a conductive material including a carbon-based material such as natural graphite, artificial graphite, carbon black, acetylene black, ketjen black, a carbon fiber, or the like; a metal-based material such as a metal powder or a metal fiber containing copper, nickel, aluminium, silver, or the like; a conductive polymer such as a polyphenylene derivative or the like; or a mixture thereof.

For example, a BET specific surface area of the negative electrode active material layer may be less than 3.0 m²/g, or may be 0.6 m²/g to 1.2 m²/g. A case where the BET specific surface area of the negative electrode active material layer is less than 3.0 m²/g may have a characteristics in which an electrochemical lifespan characteristic of a cell of the battery may relatively improve.

A BET measurement may be performed by charging and discharging a lithium rechargeable battery including the negative electrode, disassembling the battery in a completely discharged state, cutting a negative electrode of the disassembled battery into a certain size, and putting the cut negative electrode into a BET sample holder, and measuring the put negative electrode using a nitrogen gas adsorption method.

The negative electrode may have a cross-section loading level (L/L) of 6 mg/cm² to 65 mg/cm².

The separator 13 may be a polymer film that passes a lithium ion, may use polyethylene, polypropylene, polyvinylidene fluoride, or a multifilm of two or more films thereof, and may use a mixed multifilm such as a polyethylene/polypropylene two-layer separator, a polyethylene/polypropylene/polyethylene three-layer separator, a polypropylene/polyethylene/polypropylene three-layer separator, or the like.

For example, a shape maintaining member 20 may be formed at a lower end portion of the electrode assembly 100. According to some embodiments, electrode tabs 21 and 23 of the first electrode 11 and the second electrode 12 may protrude at an upper side of the electrode assembly 100, respectively, and the lower end portion may be an opposite end portion of the upper side where the electrode tabs 21 and 23 are not formed.

The separator 13 may be formed to be larger than the first electrode 11 and the second electrode 12, and may protrude further outward than upper end portions of the first electrode 11 and the second electrode 12. Adjacent separators 13 may be spaced apart from each other due to thicknesses of the first electrode 11 and the second electrode 12.

The shape maintaining member 20 may be formed on a cross-section of the separator 13 exposed at the lower end portion of the electrode assembly 100. In some embodiments, the shape maintaining member 20 may flow into a gap between separators 13 to connect adjacent separators 13 to each other while filling the gap between the separators 13. Thus, the separator 13 may be inserted into and fixed to the shape maintaining member 20. For example, a lower end portion of the separator 13 may be inserted into and fixed to the shape maintaining member 20.

The shape maintaining member 20 may have a low wetting property (or low impregnation) with respect to an electrolyte, may have a hardness of 90 or less to prevent the rechargeable battery from being damaged by a falling impact of the rechargeable battery, and may have elasticity to absorb external impact.

The shape maintaining member 20 may be a photocurable adhesive. For example, the shape maintaining member 20 may be a photocurable acryl-based adhesive, and may have a viscosity in a range of 7,000 to 30,000 cPs.

The shape maintaining member 20 may be formed at a certain distance from the curved portion R of the electrode assembly 100. According to some embodiments, the shape maintaining member 20 may be located at a certain distance D away from the curved portion R, and the distance D may be greater than or equal to the electrode assembly thickness (T) * 1/2.

An interval between the separators 13 may become wider toward the curved portion R compared with the flat portion P of the electrode assembly 100, so that the shape maintaining member 20 penetrates between the separators 13 to a deeper depth than the flat portion P when the shape maintaining member 20 is formed. Thus, the shape maintaining member 20 may contact the active material layers 3 and 6 of the first electrode 11 and second electrode 12. Therefore, the shape maintaining member 20 may be formed at a certain distance D from the curved portion R where the interval between the separators is wide. According to some embodiments, the certain distance D may be located at a distance greater than or equal to 1/2 of the electrode assembly thickness from both side surfaces of the electrode assembly.

A width T1 of the shape maintaining member 20 may be formed to be equal to or smaller than a lower width T of the electrode assembly 100.

The shape maintaining member 20 may be formed with a uniform thickness (or a relatively uniform thickness) T2 so as to have a flat or planar surface. For example, the thickness T2 of the shape maintaining member 20 may be in a range of 100 µm to 500 µm.

According to some embodiments, as in an electrode assembly 101 of FIG. 4, the shape maintaining member 20 may be formed in a shape where a thickness thereof becomes greater toward a central portion thereof. Therefore, a cross-section obtained by cutting the shape maintaining member 20 may have a semicircular structure. According to some embodiments, a thickness T3 of the central portion may be in a range of 500 µm to 1,000 µm, and may protrude outward from an edge thereof.

If the shape maintaining member 20 is formed as in the embodiments of the present disclosure, a defect in which a shape of the pouch is deformed does not occur when the electrode assembly is inserted into the pouch and then a formation process (or a charging/discharging process) and a process of removing a gas from the pouch are performed. That is, the shape maintaining member 20 may reduce an interval between the electrode assembly 100 and the pouch 200, and the pouch 200 may be supported by the shape maintaining member 20 so that the pouch 200 maintains a constant shape. Therefore, even if a pressure is applied to the pouch due to a pressure differences between the inside and the outside of the pouch or the like in the process, deformation of an outer shape of the pouch may be prevented or reduced.

Referring back to FIG. 1, the electrode assembly 100 may be contained in a pouch-type case 200 together with the electrolyte. The pouch-type case may be formed of a laminate exterior material, and the electrode assembly 100 may be located between a lower exterior material 201 and an upper exterior material 202, and then an edge of the exterior material may be thermally welded to seal the pouch-type case.

For example, the laminate exterior materials 201 and 202 may be formed as a multi-layer structure having a first insulating layer 32, a metal layer 33, and a second insulating layer 34. For example, various adhesive layers or functional layers may be further added in the multi-layer structure.

The first insulating layer 32 may be formed of a material with an insulation property and thermal adhesiveness on an inner surface of the laminate exterior material, so that the edge of the exterior material is thermally welded to seal the pouch-type case in a state in which the electrode assembly 100 is accommodated. For example, the first insulating layer 32 may be formed on one surface of the metal layer 33, and may form the inner surface of the laminate exterior material facing the electrode assembly 100. The first insulating layer 32 may be formed of casted polypropylene (CPP) or its equivalent that does not react with the electrolyte.

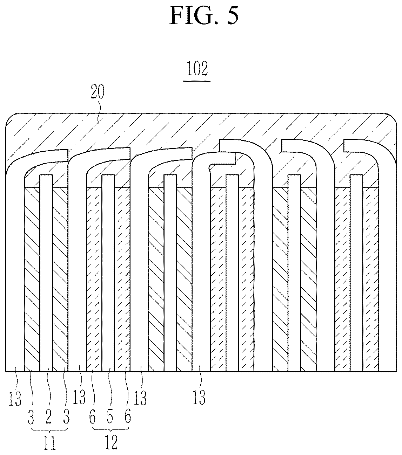

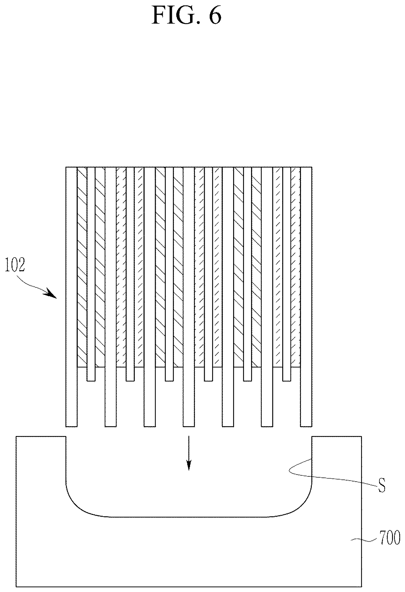

FIGS. 5, 7 to 9 are schematic views of electrode assemblies according to some embodiments of the present disclosure, and FIG. 6 is a view for describing a method of folding the separator according to some embodiments of the present disclosure.

Because most of the electrode assemblies of FIGS. 5 to 9 are the same as the electrode assembly of FIG. 1, only other portions will be described in more detail.

The electrode assembly 102 of FIG. 5 may be an electrode assembly with a jelly roll shape formed by winding the first electrode 11, the separator 13, and the second electrode 12. The separator 13 that protrudes from the first electrode 11 and the second electrode 12 may be folded toward a center of a lower surface of the electrode assembly 102.

The separator 13 may be bent using a separator jig 700 shown in FIG. 6, and the separator jig 700 may include a groove S where the electrode assembly 102 is seated. The groove S may have a curved corner. Thus, the groove S may guide a folding direction of the separator 13 so that the separator 13 is easily bent toward a center of the electrode assembly 102 as the electrode assembly 102 is seated.

The separator jig 700 may adjust a temperature if necessary, and may be a heating device with a heating wire or the like installed therein.

The separator 13 may become flexible by heat, and may become easy to form by heat. Therefore, by heating the separator jig 700 to a certain temperature or higher to transfer heat to the separator 13, the separator 13 may be easily bent inside the electrode assembly.

If the separator 13 is bent, the separators 13 may overlap to form a relatively flat surface shown in FIG. 5, and the shape maintaining member 20 may be formed on the flat surface to form the shape maintaining member 20 having a relatively more uniform thickness.

In FIG. 1, when the shape maintaining member 20 is formed, the shape maintaining member 20 flows into the gap between the separators 13 before applying an adhesive for forming the shape maintaining member and then curing the applied adhesive, but in FIG. 6, the shape maintaining member 20 does not flow into the gap between the separators 13 due to the bent separator 13 so the shape maintaining member 20 having a constant thickness (or a relatively constant thickness or a planar surface) is formed even with a smaller amount.

According to some embodiments, an amount entering the gap between the separators 13 may not be constant, so that the shape maintaining member is formed with a non-uniform thickness. However, in FIG. 5, the separator 13 may be bent to form a flat bottom where the shape maintaining member will be formed and then the shape maintaining member may be formed on the flat bottom so that the shape maintaining member is formed with a more uniform thickness.

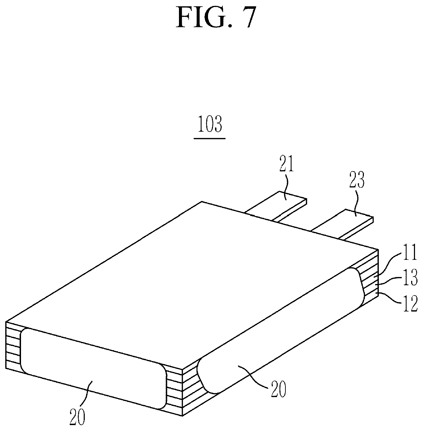

As shown in FIG. 7, in the electrode assembly 103, the first electrode 11, the separator 13, the second electrode 12, and the separator 13 may be alternately stacked, and the first electrode 11, the separator 13, the second electrode 12, and the separator 13 may be a sheet type material individually separated from each other.

As shown in FIG. 7, the stacked electrode assembly including a sheet-type electrode may have an end portion of the separator 13 exposed on all four surfaces. Thus, the shape maintaining member 20 may be formed on the remaining three surfaces except for one surface on which the electrode tabs 21 and 23 are formed.

If the shape maintaining member 20 is formed at the stacked electrode assembly 103 as shown in FIG. 7, a fixing tape for aligning and fixing positions of the stacked electrode and separator may not be used.

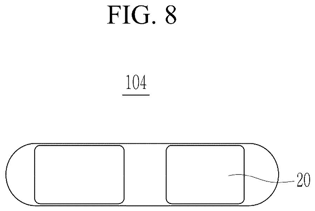

As shown in FIG. 8, the shape maintaining member 20 of an electrode assembly 104 may be discontinuously formed along a lower surface of the electrode assembly 104. The shape maintaining member 20 according to some embodiments of the present disclosure may prevent or reduce deformation of the pouch and may maintain the pouch in a constant shape during the formation process and the gas discharging process. Even if the shape maintaining member 20 is discontinuously formed, the shape maintaining member may support the pouch in the inside of the pouch so that the pouch maintains a constant shape.

If an interval between adjacent shape maintaining members 20 is wide, a pressure may be applied to the pouch corresponding to the wide interval so that the pouch is distorted. Thus, the interval between the shape maintaining members 20 may be narrowly formed to have a narrower interval than a lower width of the electrode assembly 104, so that the pouch is not deformed even if the pressure is applied.

If the shape maintaining member 20 is discontinuously formed, the shape maintaining member 20 may be formed only at a region excluding a portion where which a phenomenon such as falling out of a tail occurs in a case in which the tail falling out occurs where a portion of the electrode falls out of the electrode assembly due to misalignment when the electrode assembly is assembled.

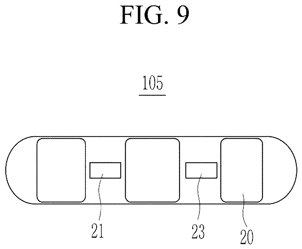

For example, as shown in FIG. 9, the shape maintaining member 20 may be formed only at a region excluding the electrode tabs 21 and 23 located at an upper side of an electrode assembly 105.

While this disclosure has been described in connection with what is presently considered to be practical embodiments, it is to be understood that the disclosure is not limited to the disclosed embodiments. On the contrary, it is intended to cover various modifications and equivalent arrangements included within the scope of the appended claims, and their equivalents.

**Description of Some of the Reference Symbols**

| | | | |
|---|---|---|---|
| 11: | first electrode | 12: | second electrode |
| 13: | separator | 20: | shape maintaining member |
| 21, 22: | electrode tab | | |
| 100, 101, 102, 103, 104, 105: | electrode assembly | | |
| 200: | pouch | 700: | separator jig |
| 1000: | rechargeable battery | | |

## Claims

1. An electrode assembly comprising:
an assembly in which a first electrode, a separator overlapping the first electrode, and a second electrode overlapping the separator are alternately stacked; and
a shape maintaining member at one side of the assembly where end portions of the first electrode, the separator, and the second electrode are exposed,
wherein the shape maintaining member is a predetermined distance away from both side surfaces of the assembly that are at both sides around the shape maintaining member.

2. The electrode assembly as claimed in claim 1, wherein the shape maintaining member is at least 1/2 of a thickness of the electrode assembly from both side surfaces of the assembly.

3. The electrode assembly as claimed in claim 1 or claim 2, wherein the shape maintaining member is continuously formed along the one side of the assembly.

4. The electrode assembly as claimed in claim 1 or claim 2, wherein the shape maintaining member is discontinuously formed along the one side of the assembly.

5. The electrode assembly as claimed in claim 4, wherein the first electrode and the second electrode include a first electrode tab and a second electrode tab protruding out of the separator, and the shape maintaining member is at a region where the first electrode tab and the second electrode tab are not formed.

6. The electrode assembly as claimed in any one of claims 1 to 5, wherein the separator is bent toward a center of the assembly, and the shape maintaining member is formed on the bent separator.

7. The electrode assembly as claimed in any one of claims 1 to 5, wherein the end portion of the separator is inserted into the shape maintaining member.

8. The electrode assembly as claimed in any one of claims 1 to 7, wherein the shape maintaining member becomes thicker toward a center bisecting a thickness of the assembly to have a hemispherical cross section.

9. The electrode assembly as claimed in any one of claims 1 to 8, wherein a thickness of the shape maintaining member at an edge of the assembly is in a range of 100 µm to 500 µm, and a thickness of the shape maintaining member at a center of the assembly is in a range of 500 µm to 1000 µm.

10. The electrode assembly as claimed in any one of claims 1 to 7, wherein the shape maintaining member is formed with a constant thickness.

11. The electrode assembly as claimed in claim 10, wherein a thickness of the shape maintaining member is in a range of 100 µm to 500 µm.

12. The electrode assembly as claimed in any one of claims 1 to 11, wherein the shape maintaining member is a photocurable adhesive.

13. The electrode assembly as claimed in claim 12, wherein the photocurable adhesive is an acryl-based adhesive.

14. A rechargeable battery comprising:
the electrode assembly of any one of claims 1 to 13; and
a pouch accommodating the electrode assembly and an electrolyte.
